# EUROPEAN PATENT APPLICATION

(11) **EP 1 561 952 A1**
(43) Date of publication of application: **10.08.2005**
(21) Application number: 03425598.4
(22) Date of filing: 16.09.2003
(51) Int. Cl.: F15B 13/08, B60P 1/16, G05G 9/047, F16K 31/60

(54) **Pneumatic control device**

(71) Applicant: O.M.F.B. S.p.A. -Hydraulic Components, 25050 Provaglio d'Iseo (Brescia) (IT)
(72) Inventor: Bianchi, Amedeo, 25050 Provaglio d'Iseo Brescia (IT)
(74) Representative: Crippa, Paolo Ernesto

(57) **Abstract**

A pneumatic control device (1) comprising an inlet (3) for compressed air, connected by valves (13,14,15), to a PTO outlet (5) for air destined to engage a power take off (6) and at least one operating outlet (7,8) for air destined to control an operating status, in which the valves (13,14,15) comprise a pneumatic PTO valve (13) to open and close the connection of fluid between the inlet (3) and the PTO outlet (5) and at least one pneumatic regulation valve (14,15) to regulate the connection of fluid between the inlet (3) and the operating outlet (7,8). The device (1) also comprises a single control organ (20) which cooperates with the PTO valve (13) and with the regulation valve (14,15) to open and close the PTO valve (13) through the positioning of the control organ (20) in an open (A) or closed (C) PTO position and to regulate the regulation valve (14,15) through the regulatory movement of the control organ (20) without abandoning the PTO position.

## Description

This invention concerns a pneumatic control device to control the engaging and disengaging of a power take off (PTO) and at least one operating status of an actuation device, such as the rise and descent of the tipping body of a vehicle.

There are pneumatic control devices that comprise a compressed air inlet connected by suitable valves to an outlet for a PTO for air destined to engage a power take off and one or more operating outlets for air destined to control one or more operating statuses, respectively, such as the main switch of an oil dynamic circuit for the rise and descent of the tipping body of a truck.

Pneumatic control devices usually comprise a pneumatic PTO valve activated by a control lever, to open and close the connection of fluid between the inlet opening and PTO outlet opening, and one or more extra pneumatic valves known as operating valves, activated by one or more regulation knobs, to regulate the connection of fluid between the inlet and the operating outlets.

With this kind of pneumatic control device, the power take off, for the oil dynamic activation of a tipping body for example, is engaged and disengaged using the control lever, while the rise and/or descent movement of the body is regulated using the regulation knob.

The operation of the control device using two controls involves a risk of confusion and is rather slow due to the time required to operate the two controls one after the other, while the simultaneous activation of both controls requires exceptional manual dexterity or the use of both hands.

The aim of this invention is to supply a pneumatic control device with characteristics such as to avoid the inconveniences mentioned with reference to the existing technique.

This aim is achieved using a pneumatic control device comprising an inlet for compressed air, connected by valves to a PTO outlet for air destined to engage a power take off and at least one operating outlet for air destined to regulate an operating status, in which said valves comprise a PTO pneumatic valve to open and close the connection of fluid between the inlet and at least one operating outlet, in which there is a single control organ cooperating both with the PTO valve and with the at least one regulation valve to:

- open and close the PTO valve by positioning the control organ in a PTO position for opening and closing respectively and;

- to regulate the at least one regulation valve using a regulation movement of the control organ without abandoning said PTO position.

To better understand the invention an example of a form of non restrictive creation is described below, referring to the figure annexed, in which:

figure 1 is a prospective view of a control device according to the invention;

figure 2 shows a truck with tipping body, equipped with a control device according to the invention;

figures 3 and 4 are partial sections of a form of creation of the pneumatic control device according to the invention in two states of operation;

figures 5 and 6 are partial sections along the V-V line in figure 4, which show the control device in two states of operation;

figures 7 and 8 are partial sections along the VII-VII line in figure 4, which show the control device in two states of operation;

figures 9 and 10 show the section and the lateral view of a part of the device in figure 4;

figures 11, 12 and 13 are orthogonal projections of a further part of the device in figure 4;

figures 14 and 15 are partial sections of a further form of creation of the device according to the invention in two states of operation;

figures 16 and 17 are partial sections along the XVI-XVI line in figure 14, which show the control device in two states of operation;

figures 18 and 19 are partial sections along the XVIII-XVIII line in figure 14, which show the control device in two states of operation;

figures 20 and 21 are overhead views of a part of the pneumatic control device according to two forms of creation;

figure 22 is an overhead view of a further part of the pneumatic control device according to the invention;

figure 23 is a pneumatic operation diagram of the control device according to the invention.

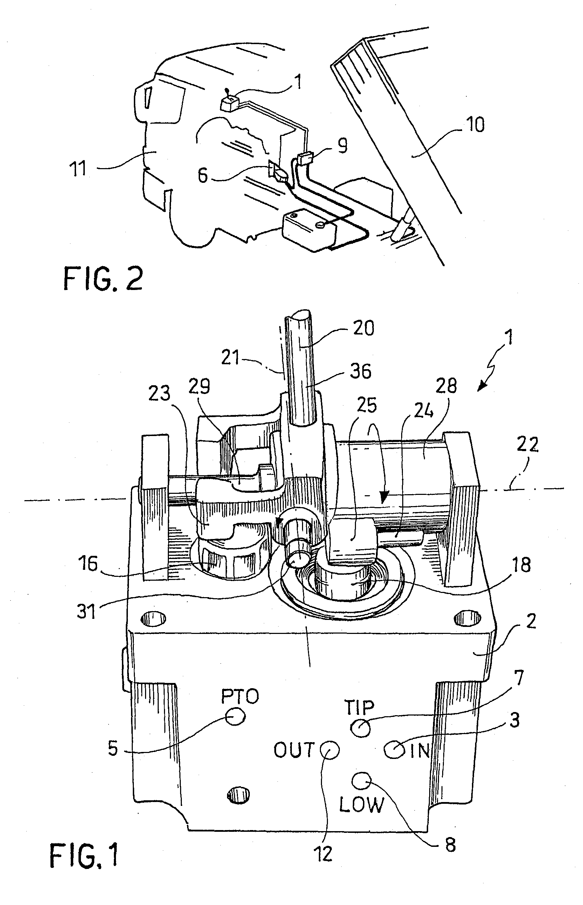

With reference to the figures, a pneumatic control device 1 comprises a supporting structure 2 equipped with one or more inlets 3 for compressed air, which are connected by suitable ducts, such as holes 4, with a PTO outlet 5 for air destined to engage a power take off 6 and with at least one, preferably two, operating outlets 7, 8 for the air destined to control, through a hydraulic shunt 9 for example, at least one, preferably two, states of operation, such as the rising and lowering of a tipping body 10 of a truck 11. Furthermore, one or more drainage openings 12 may be provided to enable the return of the compressed air in the PTO outlet 5 and in the operating outlets 7, 8 to allow the disengaging of the power take off 6, and the return of the pistons in the rise and fall chamber of the hydraulic shunt 9 to their idle status fig. 1 and 2).

The supporting structure 2 accepts a PTO pneumatic valve 13 for opening and closing the connection of fluid between the inlet 3 and the PTO outlet 5 and at least one, preferably two, pneumatic regulation valves 14, 15 for regulating the section of fluid and therefore the flow of compressed air, between the inlet 3 and each of the two operating outlets 7, 8.

In the version shown in the figures there is a first pneumatic rise regulation valve 14 for regulating the fluid between the inlet 3 and an operating rise outlet 7 (and therefore the regulation of the rising of the body 10) and a second pneumatic descent regulation valve 15 for regulating the connection of fluid between the inlet 3 and a descent operating outlet 8 (and therefore the regulation of the descent of the body 10).

Pneumatic valves 13, 14 and 15 comprise control pistons 16, 17 and 18 respectively, which are preferably arranged in special seats made in a control surface 19 of the supporting structure 2. These control pistons 16, 17 and 18 are accessible from the outside of the control surface 19 and, preferably, protrude from the latter in their idle position.

The pneumatic control device 1 comprises a single control organ 20, such as a cloche or a cursor, cooperating both with the PTO valve 13 and with at least one regulation valve 14, 15. The control organ 20 is formed in such a way as to consent on one side the opening and closing of the PTO control valve 13 by positioning the control organ 20 in an open or closed PTO position and, on the other, the regulation of at least one pneumatic regulation valve 14, 15 with a regulation movement of the control organ 20 without abandoning the set PTO position.

The control organ 20 is therefore supported by the supporting structure 2 in such a way as to be able to perform a first "positioning" movement (to engage and disengage the power take off) and at least a second "regulatory" movement (to regulate, preferably in a proportional way, the descent and rise of the body). These two movements differ preferably in the orientation of their vector, two translations or two rotations for example, the vectors of which are not parallel, or in the type of movement, for example a rotation and a translation.

According to a version of this invention, the control organ comprises a control bar 20 which rotates around a first axis 21 and a second axis 22 and is equipped with a PTO cam 23 which rests on the PTO control piston 16 and at least one, preferably two, regulation cams 24, 25 which rest on rise 17 and descent 18 regulation pistons. The PTO cam 23 is oriented and shaped in such a way as to open and close the PTO valve 13 following the rotational positioning of the control bar 20 around the first axis 21 in the respective PTO opening and closing position.

The regulation cam(s) 24, 25 however are oriented and shaped in such as way as to regulate the regulation valve(s) 14, 15 following the rotational regulation of the control bar 20 around the second axis 22.

In the event in which, during the rotational regulation of the control bar 20, the PTO cam 23 should turn around the second axis 22, it is preferable to shape the portion of the PTO cam 23 which drags during this rotation on the PTO piston 16, in such a way as to avoid substantial movement by the latter.

For example, the PTO cam 23 can be rounded, preferably in a circular manner compared with the second axis 22.

In accordance with the version shown in the figures, a supporting pin 29 which is substantially parallel and suitably distanced from the control surface 19 accepts, in a rotating manner, a cam element 28 bearing the two regulations cams 24, 25. The regulation cam 24 is arranged so that it rests on the rise control piston 12 and the regulations cam 25 is arranged so that it rests on the descent control piston 18, so that:

- when the cam element 28 is rotated around the supporting pin 19 (in accordance with axis 22), in the direction of the arrow S in figure 5, the regulation cam 24 moves the rise control piston 17 against the force of a spring 26 of the rise operating valve 14, opening the latter, while the regulation cam 25 is raised by the descent control 18, which rests on its idle position (descent valve closed) thanks to the elastic preloading of a spring 27;

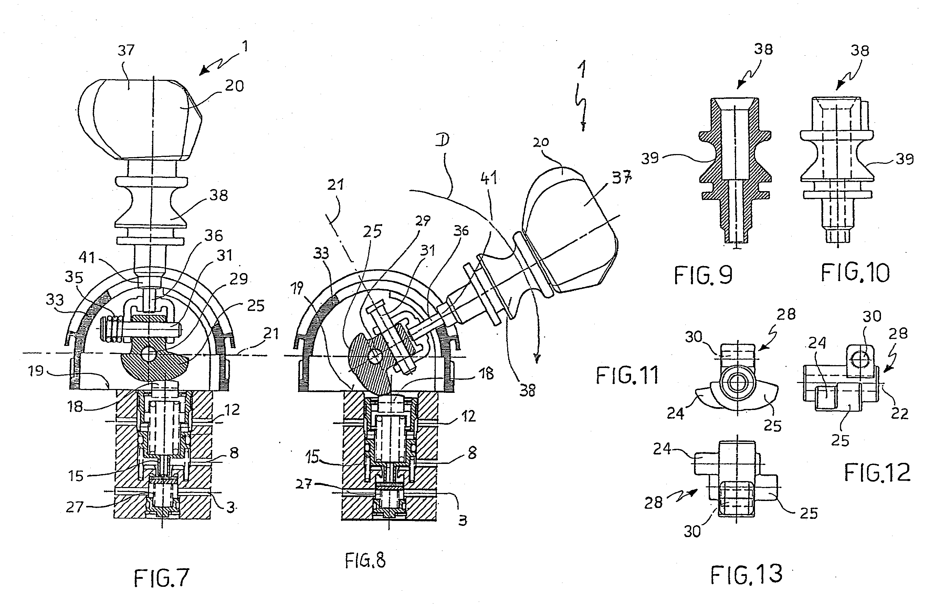

- when the cam element 28 is turned in the opposite direction (arrow D in figure 8), the regulation cam 24 moves away from the control surface 19 and the rise control piston 17 returns, thanks to the spring 16, to its idle position (rise valve 14 closed). After passing a neutral point in which both the regulation valves 14, 15 are closed, the regulation cam 25 moves the descent control piston 18 against the force of the spring 27 of the descent regulation valve 15, opening the latter, while the regulation cam 24 is raised by the rise control piston 19, which remains in its idle position thanks to the elastic preloading of the spring 26, (rising valve closed).

The cam element 28 also has a substantially transversal hole 30, preferably perpendicular, to axis 22 of the supporting pin 19, to accept a second pin 31 to rotationally support the control bar 20, to which the PTO cam 23 is solidly fastened.

In accordance with a version of the invention, the PTO cam 23 has a first portion of the control bar 20 which juts out in the opposite direction to the regulation valves 14, 15, to which it is joined in a second portion facing the control surface 19 and arranged above the PTO control piston 16 with which it cooperates.

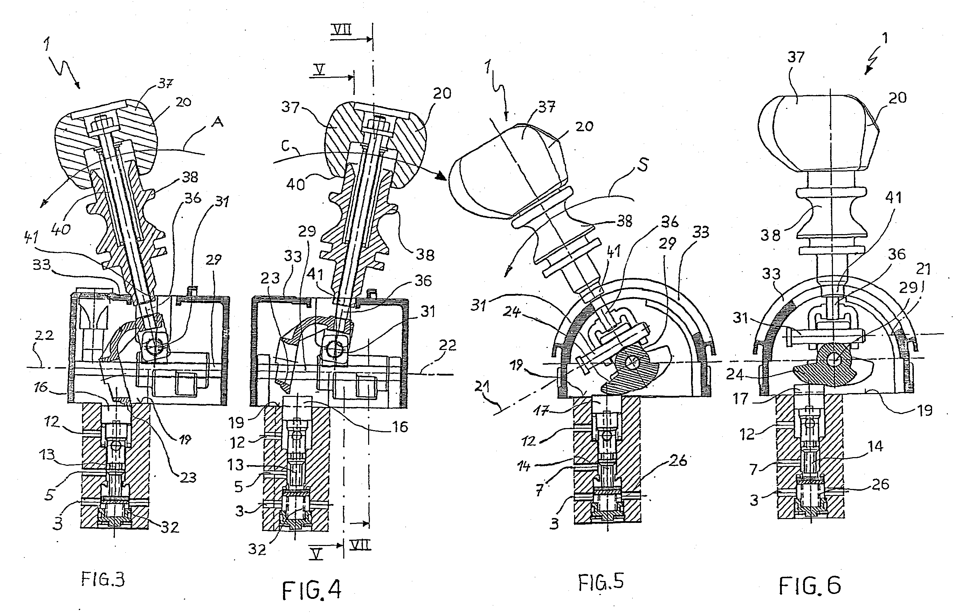

The rotation of the PTO cam 23 around the second pin 31 (first axis 21) in the direction of the arrow A in figure 3 produces the movement of the PTO control piston 16 against the force of a spring 32 of the PTO valve 13 and the opening of the latter, while the rise and descent regulation valves 14, 15 remain in their regulation positions, thanks to the unvaried rotational position of the cam element 28.

The rotation of the PTO cam 23 in the opposite direction (arrow C in figure 4) involves its movement away from the PTO control piston 16, which returns, thanks to the spring 32, into the idle position (PTO valve closed).

The rotational positioning movement of the PTO cam 23 around the second pin 31 is produced by a similar rotation of the control bar 20 which is connected to it, while the rotational movement of the cam element 28 around the supporting pin 29 is produced by a corresponding rotation of the control bar 20 which is transmitted to the cam element 28 through the second pin 31.

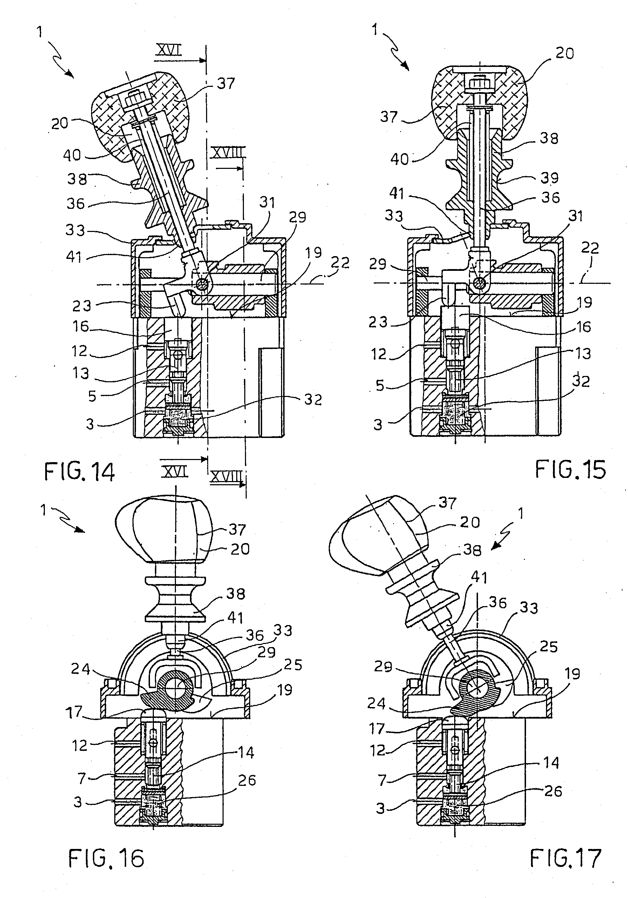

The first 21 and second 22 axes of rotation of the control bar 20 are advantageously perpendicular and can intersect, as shown in figure 14 or be moved apart, as shown in figure 6.

Depending on the needs regarding use of the pneumatic control device 1, the regulation cams 24, 25 can be shaped so that:

- they simultaneously control, at least within a set stretch of regulatory movement, more than one, preferably both, the regulation valves 14, 15, or

- activate or regulate one of the two regulation valves (14, 15) only when the other regulation valve (15, 14) is in a set idle position and/or

- control, at least within a set stretch of regulatory movement, just one of the regulation valves 14, 15, while the other is in a set idle position.

The pneumatic control device 1 also comprises a housing unit, or protective cover 33 which covers the control surface 19 and the cams 23, 24, 25 and has an opening 34 through which the control bar 20 passes.

The opening 34 is preferably shaped in such a way as to form a guide which prevents inadmissible movement of the control bar 20.

In accordance with a version of the invention, the movement guide 34 consents the positioning of the control bar 20 from the PTO open position A to the closed position C and vice versa only in one or more set regulation positions of at least one regulation valve 14, 15.

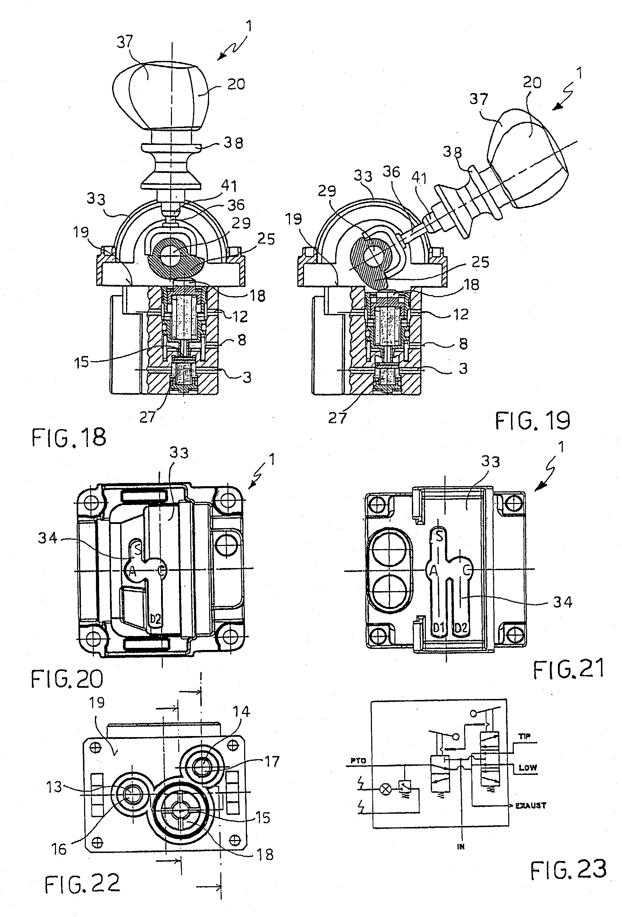

In the example shown in figure 20, the movement guide (opening 34) has a transversal stretch A - C, which consents the positioning of the control bar 20 from the PTO open position A (PTO valve open) to the PTO closed position C (PTO valve closed) and vice versa, maintaining a neutral position of the regulation valves 14, 15, in which the latter are both closed.

A longitudinal stretch A - S extends from the transversal stretch A - C of the opening 34, consenting the rotation of the control bar 20 to regulate the opening of the rise regulation valve 14 with PTO valve 13 open, as well as a longitudinal stretch C - D2, which consents the rotation of the control bar 20 to regulate the opening of the descent regulation valve 15 with PTO valve 13 closed.

In the version of the invention shown in figure 21 there is another longitudinal stretch A - D1 which consents the rotation of the control bar 20 to regulate the opening of the descent regulation valve 15 with PTO valve 13 open and, therefore, with the power take off engaged.

Advantageously, there are elasticated recall devices to take the control bar 20 elastically to the PTO closed position C and, preferably, also to the neutral position, in which the operating valves 14, 15 are closed.

In accordance with the version of the invention shown in figure 7, these elasticated devices take the form of a helicoidal spring 35 threaded onto the second pin 31, the ends of which rest against the control bar 20 and the cam element 28 respectively, and a spring (not shown in the figures) which acts between the supporting structure 2 and the cam element 28.

Consequently, once the control bar 20 has been released, it returns automatically to a position in which the rise 14 and descent 15 regulation valves are closed.

The control bar 20 comprises a stem 36 connected in a rotational manner by the second pin 31, to the cam element 28, as well as a handle 37 to manually activate the control device 1.

Between the handle 37 and the protective cover 33 there is a locking sleeve 38 slotted over the stem 36 and equipped with special cavities 39 for the positioning of the fingers of the hand that grasps the handle 37. The locking sleeve 38 is elastically moved against the protective cover 33 by a helicoidal spring 40. The locking sleeve 38 has a front portion 41 which faces the protective cover 33, which engages, preferably with a click, the special cavities or openings in the protective cover 33 to create a releasable lock on the control bar 20 in the PTO open position A and/or in the PTO closed position C with regulation valves 14, 15 closed.

Advantageously, said cavities or openings are formed by the same opening 34 that creates the bar 20 movement guide.

In order to perform the regulations of the operating statuses, in other words, of the rise and descent of the body 10, starting from the neutral position, it is necessary to raise the locking sleeve 38 against the force of the spring 40.

The operation of the pneumatic control device 1 according to this invention will be described below.

When the control bar is in the PTO closed position C, both the PTO valve and the rise and descent regulation valves are closed.

Starting from the PTO closed position C it is possible to take the control bar, after releasing it, into the position D2, in which the descent regulation valve is completely open, or in an intermediate position along the stretch C - D2, corresponding to an intermediate opening of the descent regulation valve to proportionally regulate the descent of the body with the power take off disengaged. After releasing the control bar, the latter returns, thanks to the recall spring, automatically to the PTO closed position C, where it is locked with a click.

The engagement of the power take off takes place with the movement of the control bar, after releasing it, along the stretch C - A to the PTO open position A, in which the PTO valve is open and the rise and descent regulation valves are closed.

From the PTO open position A it is possible to take the control bar, after releasing it, to the position S, in which the rise regulation valve is completely open, or in an intermediate position along the stretch A - S, corresponding to an intermediate opening of the rise regulation valve to proportionally regulate the rise of the body with the power take off engaged. After releasing the control bar, the latter returns, thanks to the recall spring, automatically to the PTO open position A, where it is locked with a click. In accordance with an advantageous version of this invention, the rise regulation valve 14 and/or the cam element 28 are configured in such a way as to raise the body in the ON/OFF mode, without proportional regulation.

For the regulation of the body descent with the power take off engaged, it is necessary to take the control bar from position A, after releasing it, to position D1, in which the descent regulation valve is completely open, or in an intermediate position along the stretch A - D1, corresponding to an intermediate opening of the descent regulation valve to proportionally regulate the descent of the body with the power take off engaged. After releasing the control bar, the latter returns, thanks to the recall spring, automatically to the PTO open position A, where it is locked with a click.

The pneumatic control device according to this invention advantageously limits the number of control organs to just one control bar through which it is possible to activate a PTO valve to engage and disengage the power take off and regulate the two regulation valves for the rise and descent of the body.

Furthermore, the pneumatic control device, as well as saving space, avoids the danger of confusion between the PTO lever and the regulation knob usually used and is particularly ergonomic, strong and reliable.

Obviously, a technician operating in the sector may make further changes and variations to the pneumatic control device according to this invention in order to satisfy contingent and specific requirements, all of which are included within the protection of the invention, as defined by the following claims.

## Claims

1. Pneumatic control device (1) comprising an inlet (3) for compressed air, connected by valves (13, 14, 15), to a PTO outlet (5) for air destined to engage a power take off (6) and at least one operating outlet (7, 8) for air destined to control an operating status, in which said valves (13, 14, 15) comprise a pneumatic PTO valve (13) to open and close the connection of fluid between the inlet (3) and the PTO outlet (5) and at least one pneumatic regulation valve (14, 15) to regulate the connection of fluid between the inlet (3) and said at least one operating outlet (7, 8), **characterised by** the fact that it comprises a single control organ (20), cooperating with the PTO valve (13) and with at least one regulation valve (14, 15) to:
- open and close the PTO valve (13) by positioning the control organ (20) in an open (A) or closed (C) PTO position and;
- activate the at least one regulation valve (14, 15) with a regulatory movement of the control organ (20) without abandoning said PTO position.

2. Device (1) according to claim 1, in which said control organ (20) comprises a control bar rotating around a first (21) and a second (22) axis, equipped with:
- a PTO cam (23) cooperating with a PTO control piston(16) of the PTO valve (13) in such a way as to open and close said PTO valve (13) by rotating the control bar (20), around the first axis (21), in the respective PTO open (A) and closed (C)positions;
- at least one regulation cam (24, 25) cooperating with a regulation control piston (17, 18) of said at least one regulation valve (14, 15) in such as way as to regulate said at least one regulation valve (14, 15) through rotation of the control bar (20) around the second axis (22).

3. Device (1) according to claim 2, in which the first (21) and second (22) axes are substantially perpendicular.

4. Device (1) according to claim 2 or 3, in which the first axis (21) intersects the second axis (22).

5. Device (1) according to any of the previous claims, comprising two operating outlets (7, 8) connected by two pneumatic regulation valves (14, 15) to said inlet (3), in which the two pneumatic regulation valves (14, 15) are controlled by the regulatory movement of the control organ (20) without abandoning said PTO position.

6. Device (1) according to claim 5, in which the two regulation valves 14, 15) can be simultaneously activated or regulated during a set stretch of the regulatory movement of the control organ (20).

7. Device (1) according to claim 5, in which, while one of the two regulation valves (14; 15) can be activated or regulated, the other regulation valve (15; 14) sits in a set idle position.

8. Device (1) according to claim 5 or 6, in which, during a set stretch of the regulatory movement of the control organ (20), one of the two regulation valves (14; 15) can be regulated, while the other (15; 14) sits in a set idle position.

9. Device (1) according to any of the previous claims, in which a movement guide (34) is provided for, consenting the positioning of the control organ(20) from said PTO open position (A) to said PTO closed position (C) and vice versa in one or more set regulation positions of the at least one regulation valve (14, 15).

10. Device (1) according to claim 9, in which said movement guide comprises an opening (34) in the housing (33) of the Device (1), which accepts the control bar (20) and is shaped in such a way as to prevent inadmissible movements.

11. Device (1) according to claim 9 or 10, comprising releasable locks (38, 39, 40), to lock the control organ(20) in the PTO open position (A) and/or in the PTO closed position (C) in said one or more set regulation positions in which the positioning of the control organ is consented from the PTO open position (A) to the PTO closed position (C) and vice versa.

12. Device (1) according to claim 11, in which said locks comprise a locking organ (38) associated to the control bar (20) to engage, preferably with a click, a corresponding cavity or opening (34) formed in the housing (33).

13. Device (1) according to claim 12, in which said cavity or opening is formed by the opening (34) in the movement guide.

14. Device (1) according to any of the previous claims, comprising elasticated devices (35) to move the control organ (20) elastically into the PTO closed position (C).

15. Device (1) according to any of the previous claims, comprising elasticated devices to move the control organ (20), elastically into a neutral regulation position in which all the regulation valves (14, 15) are closed.

16. Device (1) according to claim 2 or any of the following claims, comprising:
- a supporting structure (2) which accepts the PTO valve (13) and two regulation valves (14, 15) for the regulation of the rise and descent of the body (10) of a truck (11), in which control pistons (16, 17, 18) of the PTO valve (13) and the regulation valves (14, 15) are accepted in special openings in a control surface (19) of the supporting structure (2);
- a supporting pin (9) substantially parallel with the control surface (19);
- a cam element (28), rotationally supported by the supporting pin (29) an equipped with two regulation cams (24, 25) substantially adjacent and cooperating with the control pins of the rise (14) and descent (15) regulation valves;
- a PTO cam (23) fastened with a pin to the cam element (28) in a rotational manner around an axis (21, 31) substantially perpendicular to the axis of the supporting pin (29) and cooperating with the control piston (16) of the PTO valve (13), in which the control organ (20) comprises a control bar (20) which is connected to the PTO cam (23) to activate the rise (14) and descent (15) regulation valves through rotation around the supporting pin (29) and open and close the PTO valve (13) through rotation around the pin (31).
